**Europäisches Patentamt**

**European Patent Office**

**Office européen des brevets**

(11) Veröffentlichungsnummer: **0 453 754 A2**

## (12) EUROPÄISCHE PATENTANMELDUNG

(21) Anmeldenummer: **91104001.2**

(22) Anmeldetag: **15.03.91**

(51) Int. Cl.⁵: **B65D 1/46**

(30) Priorität: **26.04.90 DE 4013266**
**24.08.90 DE 4026801**

(43) Veröffentlichungstag der Anmeldung:
**30.10.91 Patentblatt 91/44**

(84) Benannte Vertragsstaaten:
**AT BE CH DE DK ES FR GB IT LI NL SE**

(71) Anmelder: **Lin Tec Verpackungstechnik GmbH**
**Deltastrasse**
**W-2863 Ritterhude(DE)**

(72) Erfinder: **Gröne, Horst Ditmar**
**Klint 2**
**W-2822 Schwanewede 2(DE)**

(74) Vertreter: **Möller, Friedrich, Dipl.-Ing. et al**
**Meissner, Bolte & Partner Anwaltssozietät**
**Hollerallee 73**
**W-2800 Bremen 1(DE)**

(54) Behälter, insbesondere Trinkbecher, und Verfahren zur Herstellung desselben.

㊼
2.1. Insbesondere Trinkbecher (20) verfügen vielfach über einen Becherkörper (21) aus einem Schaumkunststoff. Der obere Rand (25) solcher Trinkbecher (20) erschwert das Trinken.
2.2. Der erfindungsgemäße Trinkbecher (20) verfügt über einen auf den oberen Rand (25) des Becherkörpers (21) aufgesetzten Kragen (26) aus einem kompakten Kunststoff. Hierdurch wird eine das Trinken erleichternde Mundrolle geschaffen, die dem erfindungsgemäßen Trinkbecher (20) die Eigenschaften von vollständig aus teureren kompakten Werkstoffen gebildeten Trinkbecher verleiht.
3. Die Erfindung bezieht sich vor allem auf rotationssymmetrische Trinkbecher (20), die zur Abgabe von Getränken durch Automaten oder als Einsätze für mehrfach zu verwendende Trinkbecherhalter Verwendung finden.

Fig. 1

EP 0 453 754 A2

Die Erfindung betrifft einen Behälter, insbesondere einen Trinkbecher, gemäß dem Oberbegriff des Anspruchs 1. Des weiteren betrifft die Erfindung ein Verfahren zur Herstellung eines Behälters bzw. Trinkbechers gemäß den Oberbegriffen der Ansprüche 12 und 19.

Bei den hier angesprochenen Behältern handelt es sich um sogenannte Einmalbehälter, die nach ihrem (einmaligen) Gebrauch vernichtet werden. Die insbesondere aus Schaumkunststoff oder Pappe (gewachst sowie ungewachst) bestehenden Behälter führen zu Problemen im Bereich des die Öffnung des Behälterkörpers umgebenden Randes. Diesem Rand fehlt es vielfach an einer ausreichenden Stabilität, so daß von diesem Beschädigungen des Behälters ausgehen können. Weiterhin bereitet der obere Rand derartiger Behälter vielfach Schwierigkeiten beim Ausgießen einer Flüssigkeit.

Bei aus Schaumkunststoff gebildeten Behältern, insbesondere Trinkbechern, ergibt sich ein besonders gravierendes Problem daraus, daß der Schaumstoff-Rand ein Trinken aus einem solchen Trinkbecher erschwert oder gar unmöglich macht. Der Schaumstoff-Rand wird beim Trinken außerdem als unangenehm empfunden, indem beispielsweise sich Bruchteile der Kanten des Schaumstoff-Randes beim Trinken ablösen und in den Mund des Trinkenden gelangen können.

Es ist Aufgabe der vorliegenden Erfindung, einen Behälter, insbesondere einen Trinkbecher, der eingangs genannten Art dahingehend weiterzuentwickeln, daß die Benutzung durch den aus Schaumkunststoff, Pappe, Papier oder dergleichen gebildeten Behälterkörper nicht beeinträchtigt wird.

Zur Lösung dieser Aufgabe weist der erfindungsgemäße Behälter die Merkmale des Anspruchs 1 auf. Durch den aus kompaktem Kunststoff bestehenden umlaufenden Kragen auf dem Rand des Behälterkörpers wird ein preiswert aus Schaumkunststoff, Pappe oder dergleichen herzustellender Behälter bzw. Trinkbecher geschaffen, der in seinem maßgeblichen Randbereich die positiven Eigenschaften von aus kompaktierten Kunststoff oder ähnlichen Materialien gefertigten Behältern oder dergleichen aufweist. Vor allem bei Trinkbechern bildet der aus kompaktierten Kunststoff bestehende Kragen eine ein angenehmes Trinken ermöglichende Mundrolle.

Zweckmäßigerweise setzt sich der Kragen aus einem Bogen- oder Kreisabschnitt zur Bildung der Mundrolle und einem daran einstückig angeformten Verbindungsabschnitt zusammen. Letzterer dient zur einfachen Verbindung des Kragens mit dem Behälterkörper. Diese Verbindung kann durch Reib- und/oder Formschluß, Kleben, Schweißen oder dergleichen erfolgen, wobei auch Kombinationen der vorstehend genannten Verbindungsarten möglich sind.

Vorzugsweise ist der Verbindungsabschnitt zumindest bereichsweise an den Behälterkörper, nämlich einen Bereich seines oberen Randes, angepaßt. Dadurch läßt sich die Verbindung zwischen dem Behälterkörper und dem Kragen leicht und exakt herstellen.

Der Verbindungsabschnitt kann sowohl in randseitige Bereiche der Innenwandung als auch an einen randseitigen Bereich der Außenwandung des Behälterkörpers angepaßt sein. Entscheidend ist der Verlauf bzw. die Formgebung des oberen Bereichs des Behälterkörpers. Bei senkrecht verlaufenden Wandungen des Behälterkörpers ist es auch denkbar, die Verbindungsabschnitte sowohl der Innen- als auch der Außenwandung desselben zuzuordnen.

Gemäß einer bevorzugten Weiterbildung des Behälters ist im entsprechenden Bereich des oberen Randes des Behälterkörpers eine umlaufende Ausnehmung zur Aufnahme wenigstens eines Teils des Verbindungsabschnitts am Kragen vorgesehen. Auf diese Weise entsteht nach dem Verbinden des Kragens mit dem Behälterkörper eine nahezu übergangslose Integration des Verbindungsabschnitts in die entsprechende Wandung des Behälterkörpers.

Der Kreis- oder Bogenabschnitt des Kragens ist in seiner Dimensionierung im wesentlichen an die Abmessungen des Behälters, insbesondere an die Wanddicke, angepaßt. Um eine ausreichend dicke Mundrolle bei einem relativ dünnwandigen Behälterkörper zu erhalten, kann der Kragen über einen über die Außenwandung des Behälterkörpers wulstartig herausragenden Bogenabschnitt verfügen. Bei Behälterkörpern mit dickeren Wandstärken hingegen kann es ausreichend sein, wenn ein Wulstabschnitt Verwendung findet, der sich über den Bereich der umlaufenden randseitigen Stirnfläche des Behälterkörpers erstreckt, vorzugsweise unter Anlage hieran diesen überdeckt. Der Wulstabschnitt kann beliebige Formen aufweisen. Zweckmäßigerweise ist er rund oder elliptisch ausgebildet.

Ein erstes Verfahren zur Herstellung eines die der Erfindung zugrundeliegenden Aufgabe lösenden Bechers, insbesondere eines Trinkbechers, weist die Merkmale des Anspruchs 12 auf. Demnach wird ein vorgefertigter Kragen im Bereich eines oberen Randes mit einem ebenfalls vorgefertigten Behälterkörper verbunden.

Es lassen sich so der Behälterkörper und der Kragen unabhängig voneinander herstellen, wodurch der Kragen problemlos beliebige zweckmäßige Formen aufweisen kann und die Verformungsvorgänge den unterschiedlichen Materialien der Kragen einerseits und der Behälterkörper andererseits Rechnung tragen können.

Vorzugsweise wird der Behälter bzw. Trinkbecher derart gefertigt, daß aus einem endlos hergestellten Strang der Kragen durch Herumlegen um den oberen Rand des in üblicher Weise hergestellten Behälterkörpers gebildet wird. Der für den Kragen erforderliche Strang läßt sich sehr einfach fortlaufend herstellen und einfach dem Behälterkörper zuführen.

Das Herumlegen des aus einem Strang gebildeten Kragens um den oberen Rand des Behälterkörpers erfolgt in einfacher Weise derart, daß zueinandergerichtete Enden eines entsprechend langen Strangs zur Bildung des Kragens stumpf voreinanderliegen. Es entsteht so eine relativ glatte und kaum merkliche Stoßnaht an der Verbindungsstelle der Enden des Strangs. Gegebenenfalls können die Verbindungsenden auch in geeigneter Weise miteinander verbunden sein, beispielsweise durch Schweißen. Alternativ ist es denkbar, einen Abschnitt des Strangs mit Überlänge um den Rand des Behälterkörpers herumzulegen, wobei sich der Strang im Bereich seiner Enden auf einen kurzen Bereich überlappt. Diese Vorgehensweise hat den Vorteil, daß Toleranzen in den Abmessungen des Behälterkörpers bzw. beim Ablängen des benötigten Abschnitts vom Strang einfach kompensiert werden. Außerdem lassen sich die Enden des Kragens im Überlappungsbereich leicht verbinden.

Gemäß einer bevorzugten Weiterbildung des Verfahrens wird der Strang fortlaufend extrudiert und auf Vorratsrollen aufgewickelt. Diese haben nach einem wesentlichen Merkmal der Erfindung einen Durchmesser, der größer als der größte Durchmesser des Behälters bzw. Trinkbechers ist. Nach einem eventuell erforderlichen Wiederaufwärmen des auf einen entsprechenden Behälterkörper aufzusetzenden Strangs und einem Abtrennen eines Abschnitts von demselben, läßt sich der so gebildete Strangabschnitt leicht in die zum Aufsetzen auf den Rand des Behälterkörpers erforderliche Gestalt bringen.

Alternativ ist es möglich, einen entsprechenden Strangabschnitt als vorgefertigtes Teil zu Spritzen. Der Strangabschnitt kann einen geraden oder leicht gebogenen Verlauf aufweisen und im noch warmen Zustand oder nach einem Wiedererwärmen auf den oberen Rand des entsprechenden Behälterkörpers aufgesetzt und mit diesem verbunden werden. Es ist aber auch denkbar, den Kragen als ein geschlossenes, umlaufendes Formteil mit der Gestalt des Randes des Behälterkörpers herzustellen, und zwar durch Spritzen oder durch Tiefziehen. Es entsteht so ein fertiger Kragen in der vorgesehenen Gestalt, der ohne eine Wiedererwärmung und/oder Verformung auf den oberen Rand des jeweiligen Behälterkörpers aufgesetzt werden kann.

Das Tiefziehen und das Spritzen des Kragens ist dann besonders vorteilhaft, wenn die von ihm eingeschlossene Fläche geschlossen ist, also der Kragen einen Deckel aufweist. Dieser Deckel kann gleichzeitig zum Verschluß des gefüllten Behälters oder Trinkbechers dienen, aber auch vor oder nach dem Aufbringen des Kragens auf den oberen Rand des Behälterkörpers entfernt werden, nämlich dann, wenn die zu bildenden Behälter oder Trinkbecher keinen Deckel aufweisen sollen.

Ein zweites Verfahren zur Herstellung eines die der Erfindung zugrundeliegenden Aufgabe lösenden Bechers, insbesondere eines Trinkbechers, weist die Merkmale des Anspruchs 19 auf. Demnach wird zunächst ein bogenförmiger, ebener Zuschnitt als Rohling für den jeweiligen Kragen hergestellt. Dies kann durch Ausstanzen aus einer ebenen Materialbahn geschehen. Durch eine entsprechende Gestaltung des ebenen Zuschnitts, insbesondere durch einen entsprechenden Radius an diesem Zuschnitt, läßt sich dieser anschließend zu einem Ring mit einem vorzugsweise kegelstumpfförmigen Mantel formen. Dieser Ring kann nun durch ein entsprechendes Werkzeug mit der Mundrolle versehen werden. Dies kann sowohl vor dem Aufsetzen des Rings auf einen oberen Randbereich des Behälterkörpers als auch im Anschluß daran erfolgen. Dieses Verfahren läßt sich mit besonders einfachen Mitteln bewerkstelligen, wobei zur Bildung der Mundrolle an sich bekannte rotierende Werkzeuge verwendet werden können.

Bevorzugte Ausführungsbeispiele erfindungsgemäßer Behälter, nämlich Trinkbecher, werden nachfolgend anhand der Zeichnung näher erläutert. In dieser zeigen:

Fig. 1    einen Trinkbecher in einem teilweisen Querschnitt,

Fig. 2    eine stark vergrößert dargestellte Einzelheit II des Trinkbechers der Fig. 1 im Bereich eines Kragens,

Fig. 3    einen mit einem einen Deckel aufweisenden Kragen verschlossenen Trinkbecher in einer Ansicht analog zur Fig. 1,

Fig. 4    eine vergrößert dargestellte Einzelheit IV des Trinkbechers gemäß der Fig. 3 im Bereich des Kragens,

Fig. 5    eine alternative Ausführungsform des Kragens in einer Darstellung gemäß der Fig. 2,

Fig. 6    eine alternative Ausführungsform des Kragens in einer Darstellung analog zur Fig. 2,

Fig. 7    einen alternativen Kragen in einer Darstellung gemäß der Fig. 2,

Fig. 8    einen alternativen Kragen in einer Darstellung analog zur Fig. 2,

Fig. 9    einen alternativen Kragen in einer Darstellung gemäß der Fig. 2,

Fig. 10   einen alternativen Kragen in einer Darstellung analog zur Fig. 2,

Fig. 11   einen alternativen Kragen in einer Darstellung analog zur Fig. 2, und

Fig. 12   einen weiteren alternativen Kragen in einer Darstellung analog zur Fig. 2.

Bei dem gezeigten Behälter handelt es sich um einen Trinkbecher 20, der in erster Linie zum Einmalgebrauch gedacht ist. Der Trinkbecher 20 setzt sich zusammen aus einem Becherkörper 21, der bei den gezeigten Ausführungsbeispielen aus Schaumkunststoff gebildet ist, und einem Kragen aus nicht geschäumtem Material, insbesondere einem kompakten thermoplastischen Kunststoff.

Der Becherkörper 21 ist beim gezeigten Trinkbecher 20 rotationssymmetrisch ausgebildet. Er verfügt über einen leicht kegelförmig ausgebildeten Mantel 22, also eine leicht geneigt kreisförmig umlaufende Wandung, und einen den im Durchmesser geringeren unteren Endbereich des Mantels 22 verschließenden Boden 23. Das obere Ende des Mantels 22 ist unverschlossen. Dadurch verfügt der Becherkörper 21 über eine kreisrunde Öffnung 24, die von einem umlaufenden, oberen Rand 25 des Mantels 22 umgeben ist.

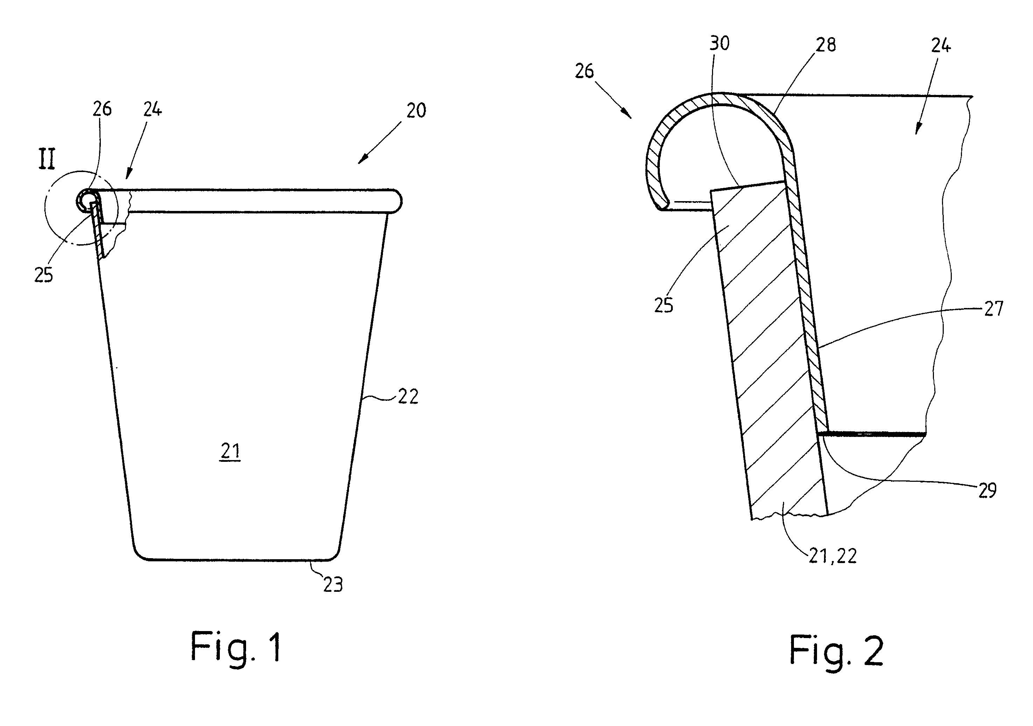

Im Ausführungsbeispiel der Fig. 1 und 2 verfügt der Trinkbecher 20 über einen Kragen 26, der sich aus einem Verbindungsteil 27 und einen einstückig daran angeformten Bogenabschnitt 28 zusammensetzt. Der Verbindungsteil 27 ist korrespondierend zu den Innenabmessungen des Becherkörpers 21, nämlich des oberen Randes 25 des Mantels 22, ausgebildet. Demzufolge verfügt hier der Verbindungsteil 27 auch über eine etwa kegelstumpfförmige Gestalt. Der Verbindungsteil 27 mündet mit einem unteren freien Ende 29 im Becherkörper 21, so daß der Kragen 26 die Öffnung 24 des Becherkörpers 21 offen läßt.

An einem dem freien Ende 29 gegenüberliegenden Ende des Verbindungsteils 27 schließt der Bogenabschnitt 28 des Kragens 26 an. Dieser Bogenabschnitt 28 ist (im Querschnitt gesehen) etwa halbkreisförmig ausgebildet und befindet sich außerhalb des Behälterkörpers 21. Dadurch überdeckt der Bogenabschnitt 28 eine etwa quer zur Fläche des Mantels 22 verlaufende Stirnwandung 30 des Becherkörpers 21. Der Außendurchmesser des Verbindungsteils 27 entspricht im gezeigten Ausführungsbeispiel etwa der doppelten Dicke des Mantels 22. Dadurch bildet insbesondere der Bogenabschnitt 28 des Kragens 26 eine ausgeprägte Mundrolle, die ein leichtes Trinken aus dem Trinkbecher 20 ermöglicht.

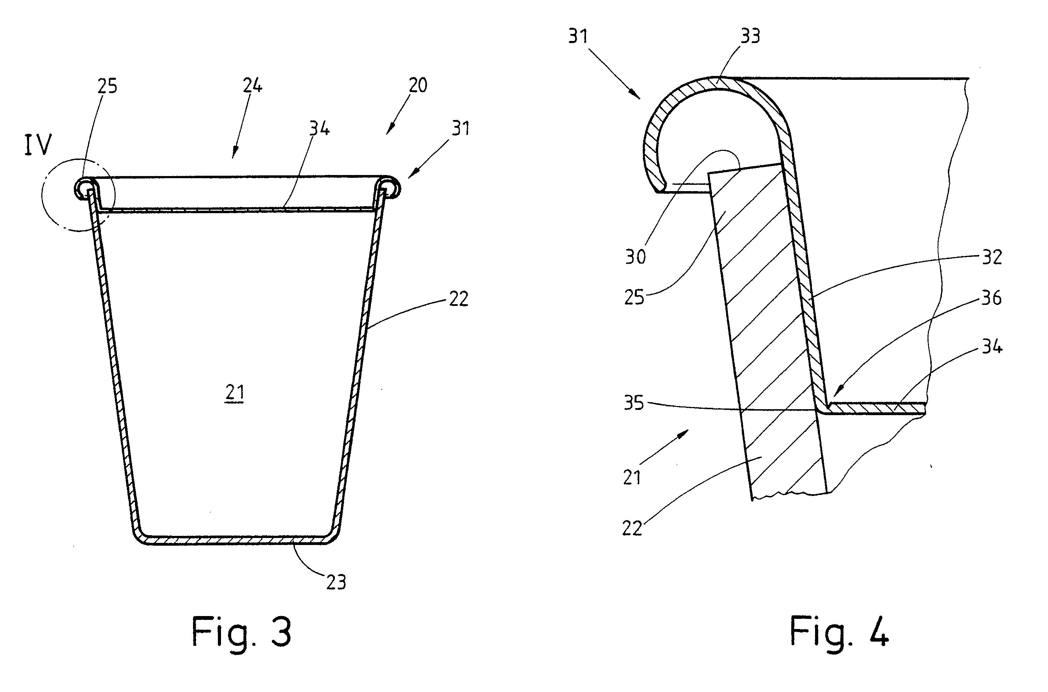

Die Fig. 3 und 4 zeigen den Trinkbecher 20 mit einem Kragen 31 nach einem weiteren Ausführungsbeispiel der Erfindung. Der Kragen 31 ist hinsichtlich seines Verbindungsteils 32 und seines Bogenabschnitts 33 analog zum Kragen 26 ausgebildet. Zusätzlich verfügt der Kragen 31 des gezeigten Ausführungsbeispiels über einen den Trinkbecher 20 gleichzeitig verschließenden Deckel 34. Letzterer ist einstückig an einen unteren freien Rand 35 des Verbindungsteils 32 angeformt und verschließt somit die Öffnung 24. Im Bereich des Übergangs des Verbindungsteils 32 zum Deckel 34 ist eine umlaufende Einkerbung 36 angeordnet. Diese ist im gezeigten Ausführungsbeispiel etwa V-förmig ausgebildet und so tief in den Kragen 26 eingebracht, daß einerseits die Öffnung 24 des Trinkbechers 20 flüssigkeitsdicht verschlossen wird, andererseits der Deckel 34 sich aber von Hand problemlos zum Öffnen des Trinkbechers 20 vom Verbindungsteil 32 trennen läßt. Zur Erleichterung dieses Abtrennvorgangs kann am Deckel eine in der Fig. 4 nicht dargestellte Aufziehlasche oder dergleichen angeordnet sein.

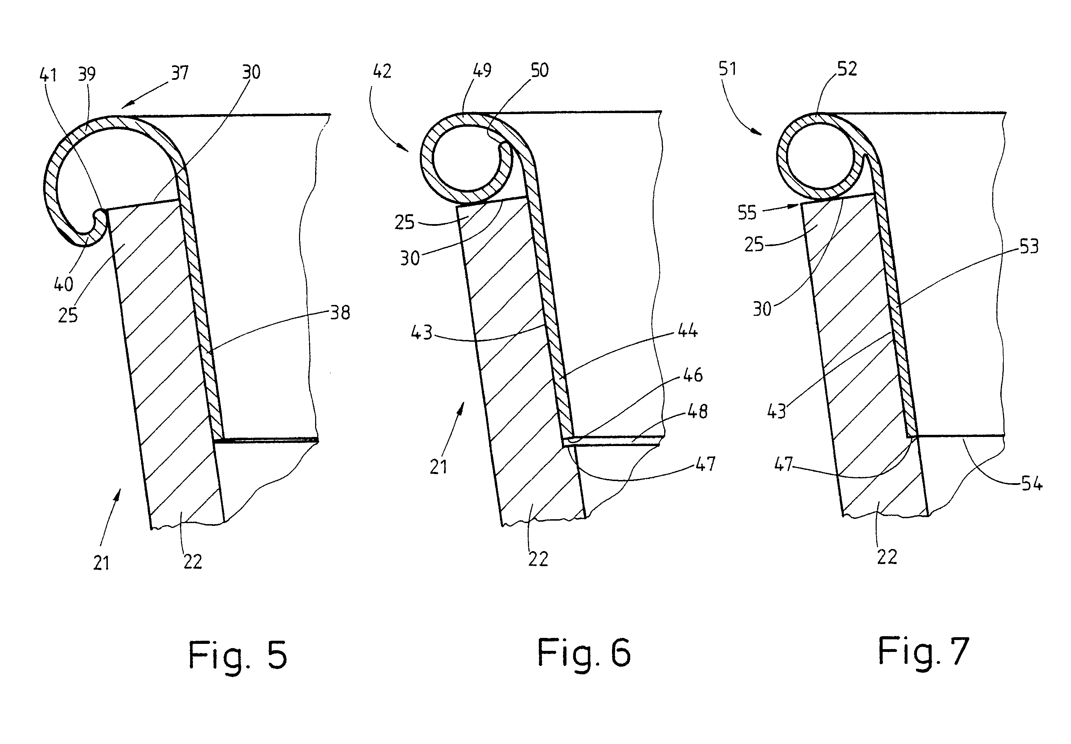

Die Fig. 5 zeigt einen weiteren Kragen 37, der analog zum Kragen 26 der Fig. 1 und 2 ausgebildet ist, also keinen Deckel 34 aufweist. Auch dieser Kragen 37 setzt sich aus einem Verbindungsteil 38 und einem Bogenabschnitt 39 zusammen. Der Verbindungsteil 38 entspricht dem Verbindungsteil 27 des Kragens 26. Lediglich der Bogenabschnitt 39 ist im gezeigten Ausführungsbeispiel demgegenüber abgewandelt, nämlich einerseits etwa halbkreisförmig ausgebildet und andererseits am außerhalb des Becherkörpers 21 sich befindenden Endbereich mit einer etwa U-förmig verlaufenden Umbördelung 40 versehen. Ein freies Ende 41 der Umbördelung 40 wird von außen gegen den Mantel 22 des Becherkörpers 21 geführt, und zwar etwa derart, daß das freie Ende 41 etwa in der Ebene der Stirnwandung 30 des Becherkörpers 21 unter Anlage hieran endet. Auf diese Weise bildet der Kragen 37 eine nahezu vollständig geschlossene Mundrolle, in die - durch die Umbördelung 40 - praktisch weder Flüssigkeiten noch Schmutz eintreten können.

Beim Ausführungsbeispiel der Fig. 6 verfügt der Trinkbecher 20 nicht nur über einen weitergebildeten Kragen 42; vielmehr ist auch der Becherkörper 21 modifiziert. Letzterer verfügt über eine umlaufende Ausnehmung 43 im Bereich des oberen Randes 25 des Mantels 22. Die Ausnehmung 43 ist ausgehend von der Stirnwandung 30 des Mantels 22 der Innenfläche desselben zugeordnet. Die Breite der Ausnehmung 43 entspricht etwa der Breite eines Verbindungsteils 44 des Kragens 42. Die Tiefe der Ausnehmung 43 ist im gezeigten Ausführungsbeispiel etwas größer als die Länge des Verbindungsteils 44. Es entsteht so zwischen dem unteren freien Rand 46 des Verbindungsteils 44 einerseits und dem Ende 47 der Ausnehmung 43 im Mantel 22 andererseits ein schmaler Spalt 48 zum Toleranzausgleich.

Der Kragen 42 verfügt über einen am oberen Rand des Verbindungsteils 44 einstückig angeformten Wulstabschnitt 49. Letzterer ist als etwa zylindrischer Hohlkörper ausgebildet, in dem ein freies Ende 50 des Wulstabschnitts 49 so weit eingerollt ist, daß dieses von innen einen an dem Verbindungsteil 44 anschließenden Bereich des Wulstabschnitts 49 überlappt. Der Durchmesser des Wulstabschnitts 49 ist im gezeigten Ausführungsbeispiel etwas größer als die Wanddicke des Mantels 22, wodurch der Wulstabschnitt 49 etwa in Verlängerung des Becherkörpers 21 sich im Bereich der oberen Stirnwandung 30 des Mantels 22 befindet, und zwar im gezeigten Ausführungsbeispiel unter Anlage daran. Dadurch begrenzt der Wulstabschnitt 49 die Eintauchtiefe des Verbindungsteils 44 in den Becherkörper 21 unter Bildung des Spalts 48.

Die Fig. 7 zeigt einen Kragen 51, der im Querschnitt im wesentlichen dem Kragen 42 der Fig. 6 entspricht. Ein Wulstabschnitt 52 dieses Kragens 51 ist geschlossen rohrförmig ausgebildet. Einseitig hieran ist übergangslos ein Verbindungsteil 53 angeformt.

In der Fig. 7 ist weiterhin eine alternative Zuordnung des Kragens 51 zum Becherkörper 21 dargestellt, indem nämlich ein freier Rand 54 des Verbindungsteils 53 an dem Ende 47 der auch hier vorhandenen Ausnehmung 43 im Becherkörper 21 anliegt zur Begrenzung der Eintauchtiefe des Kragens 51 in den Becherkörper 21. Demzufolge befindet sich zwischen der Stirnwandung 30 des Becherkörpers 21 und der Unterseite des Wulstabschnitts 52 ein kleiner Spalt 55.

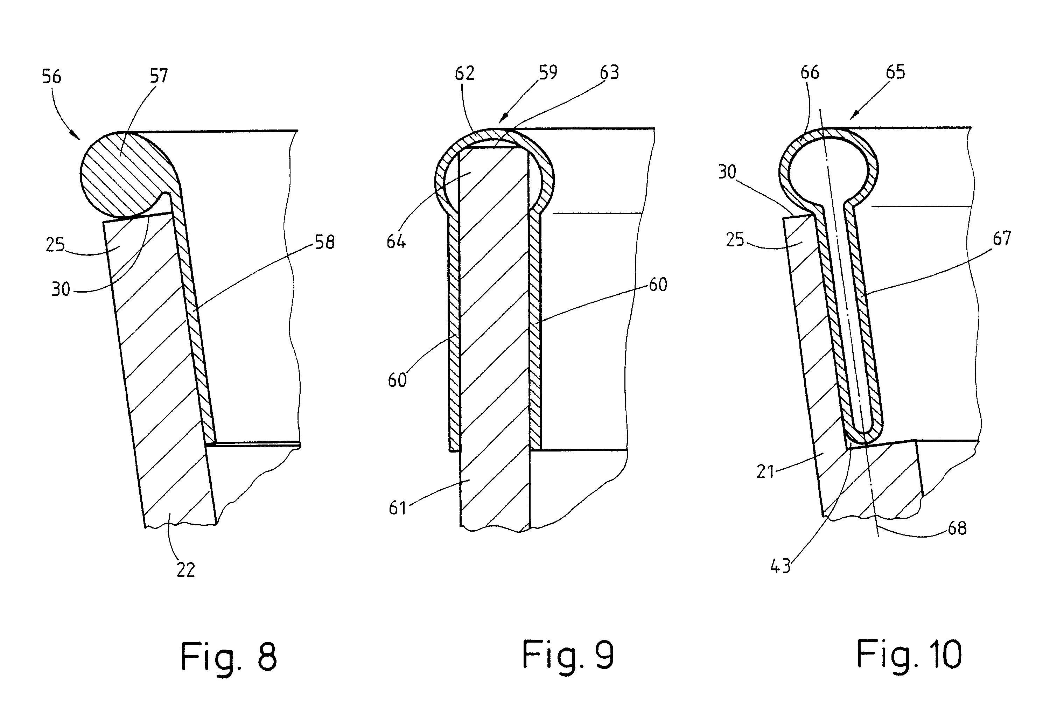

Die Fig. 8 zeigt einen Kragen 56, der wiederum im Querschnitt dem Kragen 51 bzw. 42 entspricht, aber einen massiven Wulstabschnitt 57 ohne einen inneren Hohlraum aufweist. Dadurch entsteht ein besonders stabiler Kragen 56. Der Verbindungsteil 58 des Kragens 56 liegt im gezeigten Ausführungsbeispiel wie bei den Ausführungsbeispielen der Fig. 1 bis 4 an der Innenseite des Becherkörpers 21 an, da hier der Mantel 22 keine Ausnehmung 43 aufweist. Jedoch kann der Kragen 56 mit dem Verbindungsteil 58 auch gemäß der Fig. 6 oder 7 in einer entsprechenden Ausnehmung 43 im Mantel 22 angeordnet sein.

Die Fig. 9 zeigt einen im wesentlichen U-förmig ausgebildeten Kragen 59. Letzterer verfügt über zwei parallele Verbindungsteile 60, die einerseits an der Außenseite und andererseits an der Innenseite des dazu im gezeigten Ausführungsbeispiel zylindrisch ausgebildeten Mantels 61 des Trinkbechers 20 angeordnet sind. Auch ist es denkbar, den Kragen 59 nur auf einem zylindrischen oberen Randbereich des ansonsten kegelstumpfförmigen Mantels 61 anzuordnen.

Verbunden sind die Verbindungsteile 60 einstückig mit einem Wulstabschnitt 62. Dieser verfügt im gezeigten Ausführungsbeispiel über einen etwas mehr als halbkreisförmigen, bogenförmigen Verlauf, wobei an jedes Ende des Wulstabschnitts 62 ein Verbindungsteil 60 einstückig angeformt ist. Mit der Innenseite liegt der Wulstabschnitt 62 im gezeigten Ausführungsbeispiel auf der Stirnwandung 63 des Mantels 61 auf. Dadurch wird gleichzeitig die Aufstecktiefe des Kragens 59 auf den oberen Rand 64 des Mantels 61 begrenzt.

Die Fig. 10 zeigt ein weiteres Ausführungsbeispiel eines Kragens 65, bei dem sowohl ein Wulstabschnitt 66 als auch ein Verbindungsteil 67 als Hohlkörper ausgebildet sind. Die Hohlräume des Wulstabschnitts 66 und des Verbindungsteils 67 gehen dabei ineinander über. Der Kragen 65 ist spiegelsymmetrisch ausgebildet, indem etwa mittig unter dem wiederum etwa kreisförmigen Wulstabschnitt 66 das Verbindungsteil 67 angeformt ist. Somit verfügt der Kragen 65 über eine schlüssellochartige Querschnittsgestaltung.

Der Becherkörper 21 verfügt im gezeigten Ausführungsbeispiel im Bereich des oberen Randes 25 des Mantels 22 wiederum über eine Ausnehmung 43. Diese verfügt über eine Breite, die etwas größer ist als die halbe Dicke des Mantels 22, so daß eine Mittellinie 68 des Kragens 65 etwa in der Mitte des Mantels 22 liegt.

Die Fig. 4 zeigt einen Kragen 69, der über drei gerade Abschnitte, nämlich zwei parallele Verbindungsteile 70 und einen diese verbindenden Stegabschnitt 71, verfügt. Der jeweilige Verbindungsteil 70 verläuft zum Stegabschnitt 71 etwa unter einem Winkel von 90°. Auf diese Weise liegen die Verbindungsteile 70 auf der Außen- oder Innenseite des Mantels 22 an, während der Stegabschnitt 71 auf dem oberen Rand 25 des Becherkörpers 21 anliegt. Im gezeigten Ausführungsbeispiel sind die Verbindungsteile 70 unterschiedlich lang, indem der innenliegende Verbindungsteil 70 länger ist. Dadurch läßt sich der Kragen 69 leichter unter Formschluß auf den kegelstumpfartigen Mantel 22 aufsetzen. Es ist aber auch denkbar, die Verbindungsteile 70 gleich lang zu machen oder den äußeren Verbindungsteil 70 länger als den inneren Verbindungsteil 70 zu bemessen. Diese alternative Gestaltung des Kragens 69 eignet sich besonders für zylindrische Becherkörper, zum Beispiel gemäß der Fig. 9.

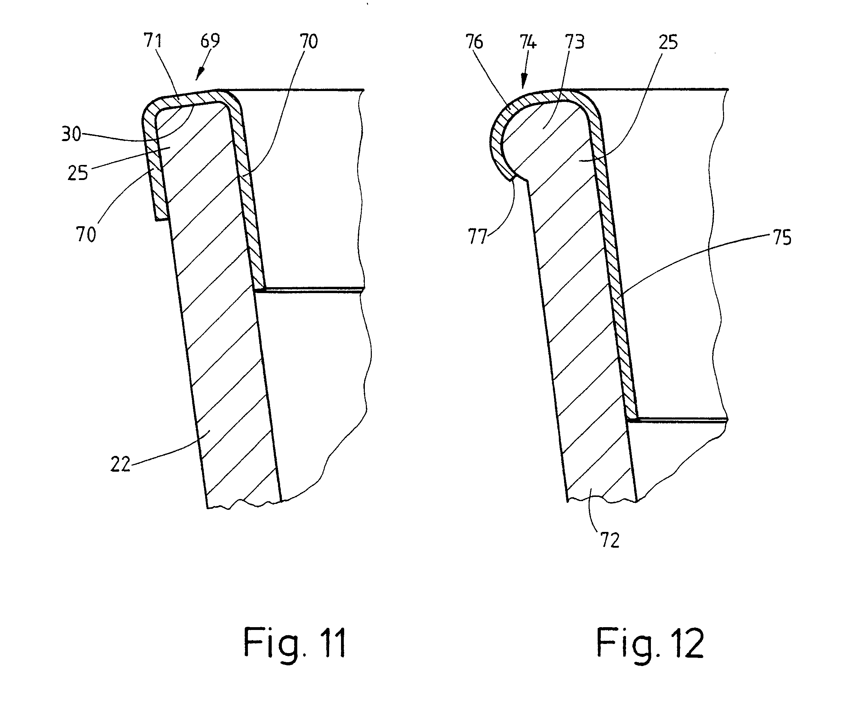

Schließlich zeigt die Fig. 12 ein Ausführungsbeispiel, bei dem ein Mantel 72 an seinem oberen Rand eine wulstförmige Verdickung 73 aufweist, die gegenüber der Außenseite des Mantels 72 vorsteht.

Ein in der Fig. 12 gezeigter Kragen 74 setzt sich zusammen aus einem wiederum an der Innenseite des Mantels 72 anliegenden Verbindungsteil 75 und einem Bogenabschnitt 76. Letzterer ist bogenförmig um die Verdickung 73 größtenteils herumgeführt. Ein freies Ende 77 des Bogenabschnitts 76 endet dabei unterhalb der breitesten Stelle der Verdickung 73. Dazu bildet das freie Ende 77 eine Hinterschneidung, wodurch der Kragen 74 formschlüssig auf der Verdickung 73 am Mantel 72 gehalten ist.

Während es ausreichen kann, den Kragen 74 im Ausführungsbeispiel der Fig. 12 durch Formschluß mit dem Becherkörper 21 zu verbinden, werden vorzugsweise die Kragen 26, 31, 37, 42, 51, 56, 59 und 65 durch Reibschluß und alternativ oder zusätzlich durch Kleben, Schweißen, Siegeln oder dergleichen am jeweiligen Becherkörper 21 befestigt. Es ist auch denkbar, die zum Becherkörper 21 gerichtete Seite des Verbindungsteils 27, 32, 38, 44, 53, 58, 60, 67, 70, 75 mit einem oder mehreren punkt- oder linienförmigen Vorsprüngen zu versehen, die vorzugsweise sägezahnartig sich beim Aufsetzen auf den Becherkörper 21 in dessen Mantel 22 eindrücken und durch Formschluß ein Herausziehen des Kragens 26, 31, 37, 42, 51, 56, 59, 65 bzw. 69 aus dem Becherkörper 21 wirkungsvoll verhindern.

Nachfolgend werden bevorzugte Verfahren zur Herstellung des Trinkbechers 20 unter Bezugnahme auf insbesondere die Fig. 1 und 2 näher erläutert:

Die Trinkbecher 20 entstehen im wesentlichen in drei Schritten, nämlich Herstellen des Becherkörpers 21, Herstellen des Kragens 26 und Verbindung des Becherkörpers 21 mit dem Kragen 26. Die beiden erstgenannten Herstellungsschritte können dabei unabhängig voneinander und gegebenenfalls auch gleichzeitig ablaufen.

Die Herstellung des Becherkörpers 21 erfolgt in an sich bekannter Weise. Demnach kann der Becherkörper 21 - wie vor allem aus den Fig. 1 bis 4 ersichtlich - einstückig in einer entsprechenden Form geschäumt sein. Es ist aber auch denkbar, den Becherkörper 21 abweichend von der Darstellung in den Fig. 1 bis 4 dadurch herzustellen, daß der Mantel 22 gewickelt und der Boden 23 hierin flüssigkeitsdicht eingesetzt bzw. eingeschweißt ist.

Der Kragen 26 wird als fortlaufender, gerader Strang extrudiert. Vor der Weiterverarbeitung kann dieser zu einer Rolle aufgerollt werden, dessen Durchmesser vorzugsweise erheblich größer ist als der des Trinkbechers 20. Zweckmäßigerweise erfolgt die Extrusion derart, daß der den Extruder verlassende Strang sich von selbst im entsprechenden Durchmesser aufwickelt.

Zum Verbinden des Kragens 26 ist von dem endlos extrudierten Strang ein entsprechend langer Abschnitt abzutrennen. Hiernach - oder alternativ auch vor dem Abtrennen - erfolgt eine Wiedererwärmung des Strangabschnitts, wodurch sich das Kragenprofil in die Kreisform des oberen Randes 25 am Becherkörper 21 bringen läßt. Danach wird der kreisrund vorgebogene Kragen 26 auf den oberen Rand 25 des Becherkörpers 21 gesteckt und mit diesem gegebenenfalls zusätzlich verbunden, beispielsweise durch Schweißen oder Kleben. Alternativ ist es auch denkbar, den vorgefertigten Strangabschnitt zur Bildung des Kragens 26 mit einem Ende auf den oberen Rand 25 des Becherkörpers 21 aufzulegen und danach weiter um den Rand 25 herumzuführen, wobei sich zwangsläufig die kreisrunde Form des Kragens 26 ergibt.

Die zueinandergerichteten Enden des Strangabschnitts zur Bildung des Kragens 26 können entweder als Stoßnaht voreinanderliegen oder geringfügig überlappen. Die letztgenannte Alternative empfiehlt sich besonders dort, wo größere Maßabweichungen des Becherkörpers 21 zu erwarten sind. Außerdem brauchen die Strangabschnitte nicht genau abgelängt zu werden.

Alternativ ist es denkbar, den Kragen 26 in seiner runden Form mit entsprechendem Durchmesser durch Spritzgießen oder Tiefziehen zu bilden. Ein derart hergestellter Kragen 26 braucht nur noch auf den oberen Rand 25 des Becherkörpers 21 aufgesetzt und gegebenenfalls mit diesem verklebt oder verschweißt zu werden. Ein Wiedererhitzen ist nicht erforderlich. Ein derart gebildeter Kragen 26 zeichnet sich auch dadurch aus, daß er über keine Stumpf- oder Überlappungsnaht verfügt.

Zwangsläufig sind in den Fig. 3 und 4 dargestellte Kragen 31 mit einem Deckel 34 durch Tiefziehen oder Spritzgießen hergestellt. Es ist auch denkbar, aus dem Kragen 31 vor dem Verbinden mit dem Becherkörper 21 den Deckel 34 zu entfernen, und zwar entweder durch Schneiden, Stanzen oder dergleichen. Auf diese Weise entsteht ein Trinkbecher 20 mit einem Kragen 26 der Fig. 1 und 2. Diese Vorgehensweise erleichtert das Handling des Kragens 26 bei der Zuführung zum Becherkörper 21, weil der vor der Verbindung noch vorhandene Deckel 34 das Ineinanderhaken mehrerer Kragen 26 verhindert. Darüber hinaus ist es auf diese Weise möglich, alternativ sowohl geschlossene als auch offene Trinkbecher 20 zu bilden.

Alternativ kann ein Zuschnitt zur Bildung des Kragens 26 aus einer flächigen Materialbahn ausgestanzt werden. Dieses geschieht derart, daß ein bogenförmiges Kreisringsegment entsteht. Der Krümmungsradius dieses bogenförmigen Zuschnitts ist derart gewählt, daß sich aus diesem ein kegelstumpfförmiger Kreisring bilden läßt, dessen unterer Randbereich korrespondierend zu den Innenabmessungen des oberen Randes 25 des Becherkörpers 21 verläuft, also von oben in den oberen Rand 25 des Becherkörpers 21 eingesetzt worden ist.

Nachdem der bogenförmige Zuschnittstreifen in eine Ringform gebracht worden ist, werden seine zueinandergerichteten Enden miteinander verbunden. Dies kann mittels einer Stumpf- oder Überlappungsnaht geschehen, und zwar entweder durch Schweißen oder Kleben. Der so entstandene kegelstumpfförmige Ring bildet einen Rohling für den Kragen 26, dessen oberer Rand mittels eines umlaufenden Werkzeugs vorzugsweise unter Erwärmung umgeformt wird zur Bildung einer umlaufenden Mundrolle, nämlich des Bogenabschnitts 28 am Kragen 26. Diese Mundrolle kann auch so geformt sein, daß ein Kragen 31, 37 bzw. 42 nach den Ausführungsformen der Fig. 4 bis 6 entsteht.

Bei einem weiteren alternativen Verfahren zur Herstellung des Trinkbechers 20 wird ein ebener, bogenförmiger Zuschnitt für den Mantel 22 des Becherkörpers 21 am oberen Rand 25 mit einem ebenfalls ebenen kreissegmentartigen Zuschnitt für den Kragen 26 versehen. Die beiden aus unterschiedlichen Kunststoffmaterialien (geschäumter Kunststoff für den Mantel 22; kompakter Kunststoff für den Kragen 26) aus separaten Bahnen ausgeschnittenen Zuschnitte werden zunächst miteinander verbunden, indem auf einer Seite (spätere Innenseite) des oberen Randes 25 des Mantels 22 ein unterer Rand des Zuschnitts für den Kragen 26 aufgeklebt oder in sonstiger Weise befestigt wird. Anschließend werden die so miteinander verbundenen Zuschnitte (gemeinsam) derart verformt, daß sie eine kegelstumpfförmige Gestalt aufweisen zur Bildung des Becherkörpers 21 und eines Rohlings für den Kragen 26. Die zueinandergerichteten Enden der Zuschnitte werden dabei mittels einer Überlappungs- oder Stumpfnaht verbunden. Dieses kann durch Kleben oder Schweißen erfolgen.

In den Becherkörper 21 wird nun der Boden 23 flüssigkeitsdicht eingesetzt bzw. eingeschweißt. Danach wird der Kragen 26 fertiggestellt, nämlich der Bogenabschnitt 28 zur Bildung der Mundrolle geformt. Dieses geschieht vorzugsweise durch ein umlaufendes, rotierendes Werkzeug, was beheizt sein kann. Nach diesem Verfahren können auch die Kragen 31, 37, 42, 69, 74 der Ausführungsbeispiele nach den Fig. 4 bis 6 sowie 11 und 12 hergestellt werden.

Nach den vorstehend beschriebenen Verfahren können prinzipiell auch Trinkbecher oder sonstige Behälter mit anderer Gestalt, beispielsweise viereckiger oder quadratischer Grundfläche, hergestellt werden. Dabei können auch Becherkörper aus gewachster oder ungewachster Pappe oder ähnlichen Materialien Verwendung finden.

**Patentansprüche**

1. Behälter, insbesondere Trinkbecher, mit einem vorzugsweise aus Schaumkunststoff, Pappe oder dergleichen bestehenden Behälterkörper, der einen (oberen) umlaufenden Rand zur Bildung einer Öffnung aufweist, **gekennzeichnet** durch einen dem oberen Rand (25) des Behälterkörpers (21) zugeordneten, umlaufenden Kragen (26, 31, 37, 42, 51, 56, 59, 65, 69, 74) aus einem kompakten Material.

2. Behälter nach Anspruch 1, dadurch gekennzeichnet, daß der Kragen (26, 31, 37, 42, 51, 56, 59, 65, 69, 74) als separates Teil aus vorzugsweise kompakten thermoplastischen Kunststoff ausgebildet ist, das mit dem Behälterkörper (21) verbunden ist.

3. Behälter nach Anspruch 1 oder 2, dadurch gekennzeichnet, daß der Kragen (26, 31, 37, 42, 51, 56, 59, 65, 69, 74) mindestens ein korrespondierend zum Mantel (22, 61, 72) des Behälterkörpers (21) ausgebildetes Verbindungsteil (27, 32, 38, 44, 53, 58, 60, 67, 70, 75) aufweist zur Verbindung des Kragens (26, 31, 37, 42, 51, 56, 59, 65, 69, 74) mit dem Behälterkörper (21) und vorzugsweise der Verbindungsteil (27, 32, 38, 44, 53, 58, 60, 67, 70, 75) korrespondierend zur Innen- und/oder Außenwandung des Behälterkörpers (21) ausgebildet ist.

4. Behälter nach Anspruch 3, dadurch gekennzeichnet, daß im Bereich des oberen Randes (25) des Behälterkörpers (21) eine insbesondere korrespondierend zum Querschnitt des Verbindungsteils (27, 32, 38, 44, 53, 58, 60, 67, 70, 75) ausgebildete (umlaufende) Ausnehmung (43) angeordnet ist zur Aufnahme wenigstens eines Teilbereichs des Verbindungsteils (27, 32, 38, 44, 53, 58, 60, 67, 70, 75).

5. Behälter nach Anspruch 4, dadurch gekennzeichnet, daß der im wesentlichen vollflächig an die Innen- und/oder Außenwandung bzw. die Ausnehmung (43) des Behälterkörpers (21) angepaßte Verbindungsteil (27, 32, 38, 44, 53, 58, 60, 67, 70, 75) mit der Innen- und/oder Außenwandung bzw. der Ausnehmung (43) des Behälterkörpers (21) durch Formschluß, Reibschluß, Kleben, Schweißen und/oder Siegeln verbunden ist.

6. Behälter nach Anspruch 1 sowie einem oder mehreren der weiteren Ansprüche, dadurch gekennzeichnet, daß der Kragen (26, 31, 37, 42, 51, 56, 59, 65, 69, 74) einen an das Verbindungsteil (27, 32, 38, 44, 53, 58, 60, 67, 70, 75) vorzugsweise einstückig angeformten Bogenabschnitt (28, 33, 39, 76), Wulstabschnitt (49, 52, 57, 62, 66) oder Stegabschnitt (71) aufweist.

7. Behälter nach Anspruch 6, dadurch gekennzeichnet, daß der Bogenabschnitt (28, 33, 39, 76) oder der Stegabschnitt (71) den oberen Rand (25) des Behälterkörpers (Becherkörper 21) zumindest größtenteils umgibt und/oder hieran wenigstens teilweise anliegt.

8. Behälter nach Anspruch 6 oder 7, dadurch gekennzeichnet, daß zumindest an einem Ende des Bogenabschnitts (28, 33, 39, 76) oder des Stegabschnitts (71) ein Verbindungsteil (27, 32, 38, 70, 75) einstückig angeformt ist.

9. Behälter nach Anspruch 8 sowie einem oder mehreren der weiteren Ansprüche, dadurch gekennzeichnet, daß dem Wulstabschnitt (49, 52, 57, 62, 66) eine vorzugsweise etwa quer zum Mantel (22) verlaufende Stirnwandung (30) am oberen Rand (25) des Behälterkörpers (Becherkörper 21) zugeordnet ist und vorzugsweise der Wulstabschnitt (49, 52, 57, 62, 66) die Stirnwandung (30) des Behälterkörpers (Becherkörper 21) im wesentlichen abdeckt, insbesondere auf der Stirnwandung (30) anliegt.

10. Behälter nach Anspruch 1 sowie einem oder mehreren der weiteren Ansprüche, dadurch gekennzeichnet, daß der Kragen (31) einen Deckel (34) aufweist, der die vom Kragen (31) eingeschlossene Fläche abdeckt.

11. Behälter nach Anspruch 10, dadurch gekennzeichnet, daß der Deckel (34) an einem unteren freien Rand (35) des Verbindungsteils (32) des Kragens (31) angeordnet ist, vorzugsweise hieran einstückig angeformt ist, insbesondere über eine umlaufende Sollbruchnaht (Einkerbung 36).

12. Verfahren zur Herstellung von Behältern, vorzugsweise Trinkbechern, mit einem vorzugsweise aus Schaumkunststoff, Pappe oder dergleichen bestehenden Behälterkörper, der einen (oberen) umlaufenden Rand zur Bildung einer Öffnung aufweist, dadurch gekennzeichnet, daß ein vorgefertigter Kragen (26, 37, 42, 51, 56, 59, 65, 69, 74) mit einem Bereich eines oberen Randes (25) eines ebenfalls vorgefertigten Behälterkörpers (21) verbunden wird.

13. Verfahren nach Anspruch 12, dadurch gekennzeichnet, daß ein etwa dem Umfang des oberen Randes (25) des Behälterkörpers (21) entsprechender Strangabschnitt zur Bildung des Kragens (26, 37, 42, 51, 56, 59, 65, 69, 74) mit stumpf voreinanderliegenden oder in einem kurzen Bereich überlappenden Enden um den oberen Rand (25) des Behälterkörpers (21) herumgelegt wird.

14. Verfahren nach Anspruch 12 oder 13, dadurch gekennzeichnet, daß der zur Bildung des Kragens (26, 37, 42, 51, 56, 59, 65, 69, 74) dienende Strang auf einer Vorratsrolle aufgewickelt und von dieser abgezogen, abgelängt, vor oder nach dem Ablängen erwärmt und anschließend umlaufend auf den oberen Rand (25) des Behälterkörpers (21) gelegt wird.

15. Verfahren nach einem oder mehreren der Ansprüche 12 bis 14, dadurch gekennzeichnet, daß der Strang extrudiert wird.

16. Verfahren nach Anspruch 12, dadurch gekennzeichnet, daß der Strang als Strangabschnitt mit etwa dem Umfang des oberen Randes (25) des Behälterkörpers (21) entsprechender Länge gespritzt, erwärmt und danach umlaufend auf den oberen Rand (25) auf- bzw. um diesen herumgelegt wird.

17. Verfahren nach Anspruch 12, dadurch gekennzeichnet, daß der Kragen (26, 31, 37, 42, 51, 56, 59, 65, 69, 74) vorzugsweise einstückig gespritzt oder tiefgezogen wird.

18. Verfahren nach einem oder mehreren der Ansprüche 12 bis 11, dadurch gekennzeichnet, daß das den Kragen (26, 31, 37, 42, 51, 56, 59, 65, 69, 74) bildende Formteil von oben auf den die Öffnung (24) des Behälterkörpers (Becherkörper 21) umgebenden Rand (25) aufgesetzt und mit diesem verbunden wird, vorzugsweise durch Formschluß, Reibschluß, Schweißen, Kleben und/oder Siegeln.

19. Verfahren zur Herstellung von Behältern, vorzugsweise Trinkbechern, mit einem vorzugsweise aus Schaumkunststoff, Pappe oder dergleichen bestehenden Behälterkörper, der einen (oberen) umlaufenden Rand zur Bildung einer Öffnung aufweist, dadurch gekennzeichnet, daß der Kragen (26, 31, 37, 42, 59, 69, 74) aus einem ebenen, bogenförmigen Zuschnitt (Kreisringsegmentabschnitt) gebildet wird.

20. Verfahren nach Anspruch 19, dadurch gekennzeichnet, daß der ebene, bogenförmige Zuschnitt (Kreisringsegmentabschnitt) mit einem entsprechenden (ebenen) Zuschnitt für den Becherkörper (21) verbunden wird und die verbundenen Zuschnitte (gemeinsam) zusammengerollt werden sowie der Zuschnitt für den Kragen (26, 31, 37, 42, 59, 69, 74) zur Bildung desselben am oberen Rand umgebördelt wird.

21. Verfahren nach Anspruch 19, dadurch gekennzeichnet, daß der bogenförmige Zuschnitt zunächst zu einem Ring gebogen und zur Bildung des Kragens (26, 31, 37, 42, 59, 69, 74) am oberen Rand umgebördelt wird, und anschließend der so gebildete Kragen (26, 31, 37, 42, 59, 69, 74) mit dem Becherkörper (21) verbunden wird.

Fig. 1

Fig. 2

EP 0 453 754 A2

EP 0 453 754 A2

IV

25    24    34    20    31

22

21

23

**Fig. 3**

31    33

30

25

32

36

34

35

21

22

**Fig. 4**

Fig. 5

Fig. 6

Fig. 7

EP 0 453 754 A2

EP 0 453 754 A2

Fig. 8

Fig. 9

Fig. 10

Fig. 11

Fig. 12